Europäisches Patentamt

European Patent Office

Office européen des brevets

(11) Publication number: **0 441 302 B1**

# EUROPEAN PATENT SPECIFICATION

(45) Date of publication of patent specification: **19.07.95**  (51) Int. Cl.⁶: **B23B 51/04**, B23B 27/14

(21) Application number: **91101474.4**

(22) Date of filing: **04.02.91**

(54) **Throw-away tipped drill.**

(30) Priority: **05.02.90 JP 26754/90**

(43) Date of publication of application:
**14.08.91 Bulletin 91/33**

(45) Publication of the grant of the patent:
**19.07.95 Bulletin 95/29**

(84) Designated Contracting States:
**DE FR GB IT SE**

(56) References cited:
**EP-A- 0 081 775       EP-A- 0 118 806
EP-A- 0 194 811       WO-A-90/15034
DE-A- 262 345         US-A- 3 540 323**

(73) Proprietor: **SUMITOMO ELECTRIC INDUS-
TRIES, LTD.
5-33, Kitahama 4-chome,
Chuo-ku
Osaka-shi,
Osaka 541 (JP)**

(72) Inventor: **Isobe, Kazutaka, c/o Itami Works of
Sumitomo Electric Ind., Ltd.,
1-1 Koyakita 1-chome
Itami-shi,
Hyogo (JP)**
Inventor: **Noguchi, Kazuo, c/o Itami Works of**

**Sumitomo Electric Ind., Ltd.,
1-1 Koyakita 1-chome
Itami-shi,
Hyogo (JP)**
Inventor: **Nomura, Toshio, c/o Itami Works of
Sumitomo Electric Ind., Ltd.,
1-1 Koyakita 1-chome
Itami-shi,
Hyogo (JP)**

(74) Representative: **Herrmann-Trentepohl, Wer-
ner, Dipl.-Ing. et al
Patentanwälte Herrmann-Trentepohl,
Kirschner, Grosse, Bockhorni & Partner
Forstenrieder Allee 59
D-81476 München (DE)**

EP 0 441 302 B1

**Description**

The present invention relates to the structure of a drill which is mainly adapted to drilling steel, cast iron or super alloy, and more particularly, it relates to the structure of a high-quality throw-away tipped drill, which is excellent in wear resistance and toughness.

Description of the Background Art

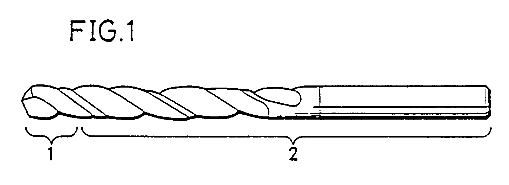

A drill is one of cutting tools for drilling steel products and the like. Fig. 1 shows an exemplary structure of a twist drill. The twist drill is formed by a cutting portion 1 which is applied to drilling, and a shank 2 which is not concerned in cutting but mainly adapted to discharge chips and is mounted on a chuck etc. of a cutting machine such as a drilling machine.

Another drilling cool with an interchangeable cutting insert is known from the European Patent application EP-A-0 118 806, which is considered to represent the nearest prior art, disclosing a drilling tool comprising a shaft with at least one flute and an interchangeable cutting insert. The insert consists of one or two flat tips, each having a main cutting edge. At the narrow side of the tip opposite to the bit there is a fastening spigot having two lateral bearing surfaces and being coaxial to the axis of the drill.

In the herein disclosed drill the insert is fixed to the shank only by utilizing the thrust force, i.e. the force acting in the direction of the rotation axis of the drill as a reaction force against the feeding movement of the drill and the torque. In this kind of cutting tool, the insert is locked with the shank by rotating it in a certain locking position in engagement with recesses provided at the shank. Using this drilling tool, it is possible to change the insert depending on the cutting operation.

In general, materials for drills are prepared from highspeed steel and cemented carbide. The high-speed steel, which is excellent in toughness but inferior in wear resistance, is improper for high-speed cutting. On the other hand, cemented carbide, which is excellent in wear resistance and tool accuracy characteristics but brittle, may cause breakage when the same is applied to a machine tool having low rigidity, for example.

In order to improve such materials, there have been proposed a structure attained by coating a cutting portion of high-speed steel with hard TiN, a structure attained by brazing a cutting portion of cemented carbide, and the like.

In recent years, there have further been proposed a structure attained by brazing different cemented carbide materials (P30 and D30) for improving wear resistance and toughness as disclosed in Japanese Utility Model Laying-Open No. 58-143115 (1983) or metallurgically integrating/connecting such different materials as disclosed in Japanese Utility Model Publication No. 62-46489 (1987), a drill of a double structure whose central and outer peripheral portions are made of different cemented carbide materials in consideration of difference between characteristics required for such portions as disclosed in Japanese Patent Laying-Open No. 62-218010 (1987), or a method of attaining such a double structure by injection molding as disclosed in Japanese Patent Laying-Open No. 63-38501 or 38502 (1988), and the like. There has also been proposed a structure attained by preparing a material for a drill from cermet Ti-base cemented carbide in order to improve adhesion resistance, as disclosed in Japanese Patent Laying-Open No. 62-292307 (1987).

A cutting portion and a shank of a drill are used under different loaded conditions. Therefore, different characteristics are required for the respective parts of such a drill. For example, wear resistance and adhesion resistance are required for a tip of the cutting portion, while toughness for maintaining strength of the tool is required for the shank. As to the tip of the cutting portion, further, different characteristics are required for central and outer peripheral portions thereof, since these portions are driven at different cutting speeds.

When a drill whose cutting portion is coated in order to satisfy such complicated requirements for the characteristics is resharpened for general use, the coating layer is inevitably separated at least from a front flank side, and hence most of the coating effect is lost.

On the other hand, a drill which is formed by brazing cemented carbide to its cutting portion is not applicable to deep hole drilling of an uncuttable material. If the shank is made of steel, further, significant difference is caused in thermal expansion coefficient between the same and the cemented carbide forming the cutting portion, to easily cause splitting or cracking in brazing.

In recent years, a cemented carbide material for the shank of a drill has been brought into a coarse grain or high binder phase state, in order to improve toughness of the shank. In this case, however, strength of the material is reduced or distortion of an elastic limit is reduced, and hence the shank is undesirably broken during perforating, due to vibration of a workpiece, instable rotation of a cutting machine, or the like.

2

While a drill formed by inseparably and integrally connecting the aforementioned cutting portion and shank can be continuously used by resharpening the cutting portion every prescribed operating time, the frequency of such resharpening is restricted, and the cost is increased. Further, sharpness and the tool life are dispersed depending on conditions of the resharpening operation. In addition, it is necessary to successively correctly comprehend the length of the drill in response to numerical control and automation of a cutting machine to which the drill is applied. Thus, the length of the drill must be measured through complicated operation every time the same is resharpened.

SUMMARY OF THE INVENTION

An object of the present invention is to provide a throw-away tipped drill comprising an insert having excellent wear resistance as well as adhesion resistance and a shank having sufficient toughness against breakage, which requires no resharpening for continuous use.

In order to attain the aforementioned object, a throw-away tipped drill having the features of claim 1 is provided. Such a throw-away tipped drill comprises an insert for cutting a workpiece and a shank to be mounted on a prescribed position of a cutting machine, and the insert is disengageably mechanically connected with the shank. The insert is formed of a silicon carbide whisker reinforced alumina sintered body, and the shank is made of steel.

Preferably the silicon carbide whisker reinforced alumina sintered body forming the insert is prepared from a sintered body of alumina containing 3.0 to 40 volume percent of silicon carbide whiskers (aspect ratio: 3 to 200).

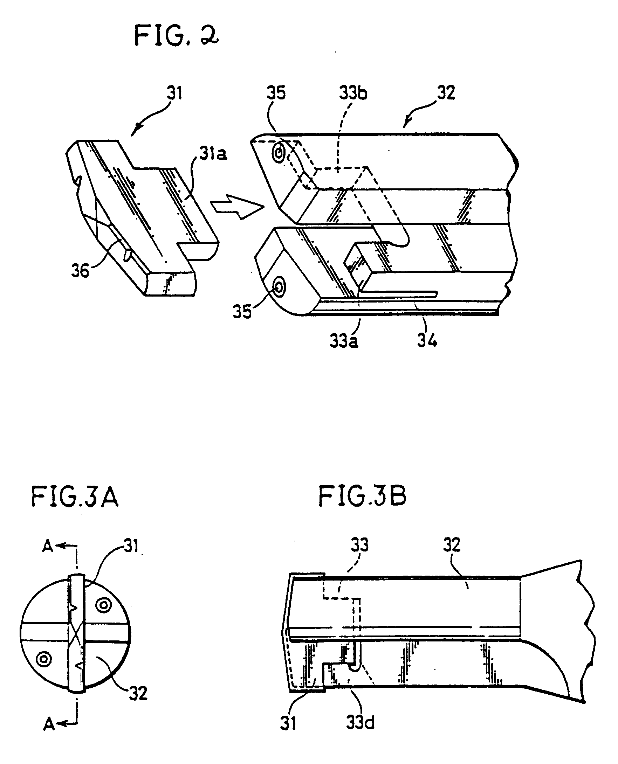

An insert and a shank embodying the inventive throw-away tipped drill are connected with each other in the system shown in Figs. 2, 3A and 3B.

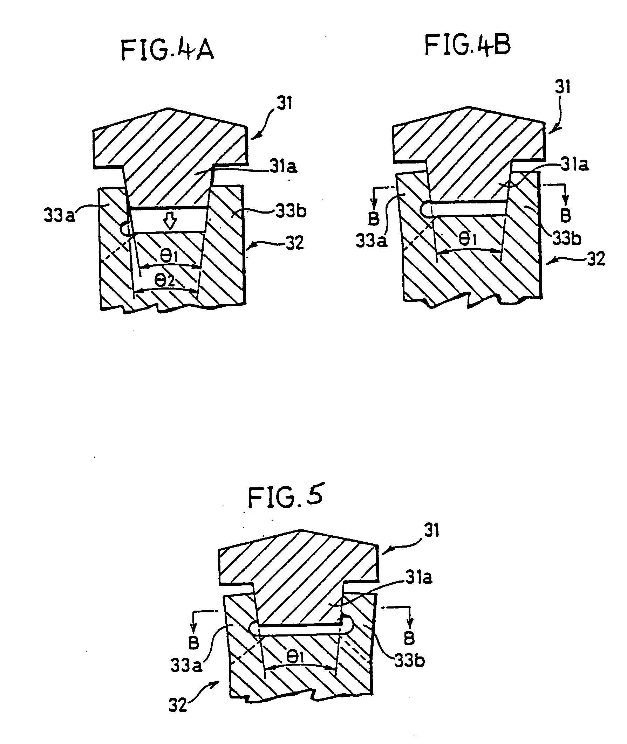

In a drill shown in Figs. 2, 3A and 3B, an insert 31 is fitted in a shank 32 along an arrow as shown in Fig. 2, so that the insert 31 and the shank 32 are connected with each other with no screw or the like, in the so-called self-grip system. In the state shown in Figs. 3A and 3B, the insert 31 and the shank 32 are connected with each other by this connection system. In such a connection state, side portions of a held portion 31a of the insert 31 are brought into contact with inner end surfaces of holding portions 33a and 33b of the shank 32 to cause frictional force, whereby the insert 31 is fixed to the shank 32. With reference to Figs. 4A and 4B, the state of such connection of the insert 31 and the shank 32 caused by engagement therebetween is explained as follows: Before the insert 31 is engaged with the shank 32, an angle $\theta_1$ formed by the left and right side portions of the held portion 31a is slightly greater than an angle $\theta_2$ formed by the opposite inner end surfaces of the holding portions 33a and 33b. When the insert 31 is press-fitted in the shank 32, the angle $\theta_2$ is gradually expanded by wedge action due to tapering of the left and right side portions of the held portion 31a and a slit 34 provided on the holding portion 33a. When $\theta_1 > \theta_2$, the held portion 31a is in contact with the holding portion 33b only at an upper end of the inner end surface of the holding portion 33a. When $\theta_2$ reaches $\theta_1$, the contact areas between both side portions of the held portion 31a and the inner end surface of the holding portion 33a are maximized as shown in Fig. 4B. The press fitting operation is stopped in this state, and the holding portion 33a is elastically deformed to cause pressing force in the contact surfaces of the same and the held portion 31a, so that the insert 31 is connected with/fixed to the shank 32 by frictional force between the contact surfaces.

A coolant supply hole 35 directly supplies a coolant to the cutting edge of the insert 31. Further, a chip breaker 36 is provided on the cutting edge of the insert 31, in order to part chips.

Fig. 5 shows another example of a shank 32, which is provided with slits 34 not only in a holding portion 33a but in another holding portion 33b. In this case, an insert 31 is press-fitted in the shank 32 so that both holding portions 33a and 33b are simultaneously expanded, thereby holding a held portion 31a by elastic force thereof.

Characteristics required for a drill are roughly classified into wear and adhesion resistance for an insert, and breakage resistance, which is represented by toughness, of a shank. A material for the insert is prepared from a silicon carbide whisker reinforced alumina sintered body for the following reason: The silicon carbide whisker reinforced alumina sintered body is prepared by introducing silicon carbide (SiC) whiskers into an alumina ($Al_2O_3$) sintered body, which has extremely high heat resistance and excellent wear resistance as a tool among ceramic materials, thereby improving toughness and increasing impact resistance. This material has a small coefficient of friction with respect to iron, and is superior in wear resistance to a sintered body of silicon nitride ($Si_3N_4$). Further, an insert formed of such a silicon carbide whisker reinforced alumina sintered body is suitable for working of not only workpieces of steel and casting but an uncuttable material such as a heat-resistant Ni alloy.

The content of the silicon carbide whiskers is preferably 3.0 to 40 volume percent since the effect of improving toughness is reduced if the content is less than 3.0 volume percent, while strength is reduced if the content exceeds 40 volume percent.

The shank, which is made of steel, is excellent in toughness and breakage resistance. Further, the material cost can be reduced.

In the drill embodying the present invention, further, the insert and the shank are disengageably mechanically connected with each other, whereby it is possible to easily disengage and throw away the insert, which is relatively damageable and short-lived.

A silicon carbide whisker reinforced alumina sintered body is employed as a material for the insert and steel is employed as a material for the shank, whereby the insert is excellent in wear resistance, adhesion resistance and thermal cracking resistance (chipping resistance), while the shank is excellent in toughness and the cost can be relatively reduced. Thus, it is possible to provide a throw-away tipped drill having high reliability, long life and high quality, which causes no chipping of the insert and abrupt breakage of the shank, at a low cost.

Since the insert and the shank are disengageably mechanically connected with each other, the insert, which is relatively damageable and short-lived, can be easily disengaged from the shank to be thrown away. Thus, the insert may not be resharpened for continuous use, whereby the cost can be further reduced as compared with the conventional drill, whose insert is inseparably integrated with a shank. Since the drill requires no resharpening of the insert, dispersion of sharpness and tool life is reduced and the overall length of the drill can be maintained constant, with no requirement for measurement of the drill length. Further, a base material for the insert can be formed by injection molding, whereby it is possible to easily form a chip breaker or the like, to further reduce the working cost.

These and other object, features, aspects and advantages of embodiments of the present invention will become more apparent from the following detailed description of embodiments of the present invention when taken in conjunction with the accompanying drawings.

## BRIEF DESCRIPTION OF THE DRAWINGS

Fig. 1 is a structural diagram showing a conventional twist drill;

Fig. 2 is an exploded perspective view showing a connection part of the so-called self-grip type drill among throw-away tipped drills to which the present invention is applied in an enlarged manner;

Fig. 3A is a front elevational view of the self-grip type throw-away tipped drill shown in Fig. 2, and Fig. 3B is a right side elevational view thereof;

Fig. 4A is a sectional view taken along the line A - A in Fig. 3A, for illustrating such a state that press fitting of an insert 31 in a shank 32 is started in the throw-away tipped drill shown in Fig. 2, and Fig. 4B is a similar sectional view for illustrating such a state that the insert 31 is connected with/fixed to the shank 32; and

Fig. 5 is a sectional view illustrating another example of a connection part of the throw-away tipped drill shown in Fig. 2, which is provided with slits 34 on both sides of holding portions 33a and 33b.

## DESCRIPTION OF THE PREFERRED EMBODIMENTS

Embodiments of the present invention are now described.

A throw-away tipped drill according to first embodiment of the present invention is formed by preparing an insert from a silicon carbide whisker reinforced alumina sintered body and disengageably mechanically connecting the same with a shank of steel in the system shown in Fig. 2.

Table 1 shows composition values of various powder materials for silicon carbide whisker reinforced alumina sintered bodies forming inserts of inventive and comparative samples. Table 1 also shows steel materials for shanks of embodiments of the invention and comparative samples. In the inventive and comparative samples shown in Table 1, inserts and shanks are connected with each other in the system shown in Fig 2. In the samples A to D, the sample D does not fall within the scope of the present invention as defined in claim 1 because the content (volume percent) of SiC whiskers is in excess of the defined range. As to the comparative sample E, the material for the insert contains no SiC whiskers. As to the comparative sample F, the material for the shank is prepared from a K30-grade cemented carbide material.

EP 0 441 302 B1

## Table 1

| Sample | | Insert Starting Composition (vol.%) | Shank |
|---|---|---|---|
| Samples embodying the invention | A | SiC Whisker (20), TiC powder (5), $Al_2O_3$ powder (Rest) | SCM435 |
| | B | SiC Whisker (15), MgO (0.5), $Y_2O_3$ (3), $Al_2O_3$ Powder (Rest) | SKS2 |
| | C | SiC Whisker (30), $ZrO_2$ (5.0), $Al_2O_3$ powder (Rest) | SCM415 |
| Comparative Sample | D | *SiC Whisker (50), TiN powder (5), $Al_2O_3$ powder (Rest) | SCM435 |
| | E | *TiC (10), $Y_2O_3$ (3), $Al_2O_3$ powder (Rest) | SCM435 |
| | F | SiC Whisker (20), TiN powder (5), $Al_2O_3$ powder (Rest) | K30-Grade Cemented Carbide |

\* : out of inventive scope

Performance evaluation tests for the aforementioned samples were made on drills of 8 mm in diameter, under the following conditions:

Workpiece: Inconel 718

Cutting Speed: 100 m/min., dry type (water-soluble cutting oil)

Feed Rate: 0.12 mm/rev.

Depth of Cut: 25 mm

Criterion: Tip conditions etc. were observed after working up to end of life.

Life: Generally regarded as ended when the outer peripheral flank was worn by at least 0.2 mm.

Table 2 shows the results of the aforementioned 15 performance evaluation tests. Excellent results were obtained as to the samples A to C embodying the invention. The cutting by the sample D was stopped after cutting 620 holes due to heavy damage of the insert thereof, which was caused by the content of Si whiskers in the insert being out of the range of 3.0 to 40 volume percent. For the purpose of reference, similar experiments were made as to four types of conventional drills as shown in the lower part of Table 2. It is understood from the results that the samples A to C embodying the invention are superior also to such conventional drills.

By the way, it is experimentally confirmed that the silicon carbide whisker reinforced alumina sintered body of the insert can effectively contain a carbonitride, a carbonized oxide or an oxide of titanium, instead of TiC or TiN.

5

Table 2

| Group | Sample | Number of Worked Holes | Abrasion of Outer Peripheral Front Flank (mm) | Depth of Adhesive Wear of Inner Peripheral Face (mm) |
|---|---|---|---|---|
| Samples embodying the invention | A | 1620 | 0.2 | 0.02 |
| | B | 1550 | 0.2 | 0.04 |
| | C | 1740 | 0.2 | 0.05 |
| | D | 620 | 0.2 | 0.13 |
| Comparative Example | E | 840 | test stopped due to insert chipping | |
| | F | 115 | test stopped due to shank breakage | |
| Reference Example | Tip :Si$_3$N$_4$ Sintered Body | 700 | 0.2 | 0.10 |
| | Tip :Coated Cemented Carbide | 240 | test stopped due to insert chipping | |
| | Tip :Coated High-Speed Steel | 150 | 0.2 | 0.15 |
| | Integrated Coated Cemented Carbide | 45 | test stopped due to shank breakage | |

Second Embodiment of the present invention is now described.

In this Example, samples of throw-away tipped drills were formed by inserts and shanks of the same materials as those for the sample A of first Example, to compare cutting characteristics as to the connection system for the self-grip drill shown in Fig. 2 (sample G) and a comparative sample of a brazed drill, having an insert of cemented carbide (sample J). Cutting conditions were as follows:

Workpiece: S50C, $H_B$ = 220
Cutting Speed V: 50 m/min. and 150 m/min. (water-soluble cutting oil)
Feed Rate: 0.2 mm/rev.
Depth of Cut: 40 mm
Diameter of Worked Hole: 20 mm
Table 3 shows the results of the evaluated characteristics.
Cutting characteristics, represented by stability, can be regarded excellent as horizontal components and thrusts of cutting balance acting on the drills by cutting resistance are reduced and values of speed dependency are reduced.
From the results it is understood that the self-grip system of the sample G attains excellent cutting characteristics.

Table 3

| Compared Characteristics / Sample | | Cutting Speed V (m/min.) | Cutting Balance (Horizontal Component) (N) | Thrust (N) | Torque (J) | Hole Diameter Over Size (μm) | Remarks |
|---|---|---|---|---|---|---|---|
| Sample embodying the invention | G — Self-Grip Type | 50 | 50 | 50 | 50 | 150 | Throw-Away Type Shown in Fig. 2. |
| | | 150 | 190 | 1850 | 3300 | 20 | |
| Comparative Sample | J — Brazed Type with Cutting Edge of Cemented Carbide | 150 | Unme-surrable | 2700  Unme-surrable | 6200 | 20 | Helical Flute Cross Thinning, Resharpening Available in 5 Times. Incapable of Parting Chips and Broken at V = 150 |

(Note) Material for insert and shank of the sample embodying the invention identical to those of sample A in Table 1.

Although embodiments of the present invention have been described and illustrated in detail, it is clearly understood that the same is by way of illustration and example only and is not to be taken by way of limitation, the scope of the present invention being limited only by the terms of the appended claim 1.

**Claims**

1. A throw-away tipped drill comprising an insert (31) for cutting a workpiece and a shank (32) made of steel to be mounted on a prescribed position of a cutting machine, said insert (31) being disengageably mechanically connected with said shank, both having portions to be engaged with each other respectively, **wherein** said insert (31) is formed of a silicon carbide whisker reinforced alumina sintered body of alumina containing 3.0 to 40 volume percent of silicon carbide whiskers, containing further a carbide, a nitride, a carbonitride, a carbonized oxide or an oxide of titanium and/or $ZrO_2$ and/or $MgO$, $NiO$ and/or $Y_2O_3$, and wherein said shank (32) is provided with left and right holding portions (33a, 33b), each having an inner end surface, one or either both of said holding portions being provided with a slit separating the inner end surface or surfaces respectively, so that the opposite inner end surfaces are relatively moved and elastically deformed upon engagement with the held portion (31a) of said insert (31) by elastic force following elastic deformation of said holding portions (33a, 33b) caused upon engagement, thereby fixing said insert (21) to said shank (32).

2. A throw-away tipped drill in accordance with claim 1, **wherein** said holding portions and the held portion (31a) provided in said insert (31) are tapered.

3. A throw-away tipped drill according to claim 2, **wherein** said portions are tapered at such angles that said inner end surfaces and said held portion are brought into surface contact with each other in a press-fitted state.

4. A throw-away tipped drill in accordance with one of the preceding claims, **wherein** said steel forming said shank (32) is prepared from SCM-material or an SKS-material.

**Patentansprüche**

1. Bohrer mit Wegwerfspitze mit einem Einsatz (31) zum Schneiden eines Werkstücks und einem Schaft (32) aus Stahl, um in einer vorgeschriebenen Stellung einer Schneidemaschine angebracht zu werden, wobei der Einsatz (31) mit dem Schaft lösbar mechanisch verbunden ist, wobei beide Abschnitte aufweisen, um jeweils miteinander in Eingriff zu kommen, wobei der Einsatz (31) aus einem mit Siliciumcarbideinkristallfäden verstärkten, gesinterten Aluminiumoxidkörper aus Aluminiumoxid besteht, der 3,0 bis 50 Vol.-% Siliciumcarbideinkristallfäden enthält, der weiterhin, ein Carbid, ein Nitrid, ein Carbonitrid, ein verkohltes Oxid oder ein Titanoxid und/oder $ZrO_2$ und/oder $MgO$, $NiO$ und/oder $Y_2O_3$ enthält, und wobei der Schaft (32) mit linken und rechten Haltebereichen (33a, 33b) ausgestattet ist, die jeweils eine innere Endfläche aufweisen, wobei ein Haltebereiche oder beide mit einem Schlitz versehen ist bzw. sind, der die innere Endfläche bzw. inneren Endflächen trennt, so daß die gegenüberliegenden inneren Endflächen bei Eingriff mit dem gehaltenen Bereich (31a) des Einsatzes (31) durch die elastische Kraft relativ bewegt und elastisch deformiert werden, die auf die elastische Deformierung der Haltebereiche (33a, 33b) folgt, die durch den Eingriff bewirkt wird, wodurch der Einsatz (31) an dem Schaft (32) befestigt wird.

2. Bohrer mit Wegwerfspitze nach Anspruch 1, **dadurch gekennzeichnet, daß** die Haltebereiche und der gehaltene Bereich (31a), der in dem Einsatz (31) vorgesehen ist, verjüngt sind.

3. Bohrer mit Wegwerfspitze nach Anspruch 2, **dadurch gekennzeichnet, daß** die Bereiche unter solchen Winkeln verjüngt sind, das die inneren Endflächen und der gehaltene Bereich in Oberflächenkontakt miteinander in einem Preßsitzzustand gebracht werden.

4. Bohrer mit Wegwerfspitze nach einem der vorhergehenden Ansprüche, **dadurch gekennzeichnet, daß** der Stahl, der den Schaft (32) bildet, aus SCM-Material oder einem SKS-Material hergestellt ist.

**Revendications**

1. Foret à plaquette jetable comprenant une pièce d'insertion (31) pour découper une pièce à usiner et une tige (32) faite d'acier destinée à être montée sur un point prescrit d'une machine de coupe, ladite pièce d'insertion (31) étant raccordée mécaniquement de façon démontable à ladite tige, toutes deux ayant des parties destinées à venir en contact l'une avec l'autre respectivement, dans lequel ladite pièce d'insertion (31) est formée d'un corps en oxyde d'aluminium fritté, renforcé par barbes de carbure de silicium, contenant 3,0 à 40 pour cent en volume de barbes de carbure de silicium, contenant en outre un carbure, un nitrure, un carbonitrure, un oxyde cémenté ou un oxyde de titane et/ou $ZrO_2$ et/ou $MgO$, $NiO$ et/ou $Y_2O_3$, et dans lequel ladite tige (32) est munie de parties de retenue gauche et droite (33a, 33b), chacune ayant une surface terminale intérieure, l'une des parties ou les deux parties de retenue étant munie(s) d'une fente séparant la ou les surface(s) terminale(s) intérieure-(s) respectivement, de sorte que les surfaces terminales intérieures opposées sont relativement déplacées et déformées élastiquement lorsqu'elles viennent en contact avec la partie retenue (31a) de ladite pièce d'insertion (31) sous l'effet d'une force élastique qui suit la déformation élastique desdites parties de retenue (33a, 33b) causée par la mise en contact, ce qui fixe ainsi ladite pièce d'insertion (31) à ladite tige (32).

2. Foret à plaquette jetable selon la revendication 1, dans lequel lesdites parties de retenue et la partie retenue (31a) formée dans ladite pièce d'insertion (31) sont effilées.

3. Foret à plaquette jetable selon la revendication 2, dans lequel lesdites parties sont effilées selon des angles tels que lesdites surfaces terminales intérieures et ladite partie retenue sont amenées en contact de surface les unes avec les autres dans un état d'ajustement serré.

4. Foret à plaquette jetable selon l'une quelconque des précédentes revendications, dans lequel ledit acier formant ladite tige (32) est préparé à partir d'un matériau SCM ou un matériau SKS.

FIG.1

1          2

EP 0 441 302 B1

FIG. 2

FIG.3A

FIG.3B

FIG.4A

FIG.4B

FIG.5